(19) Europäisches Patentamt
European Patent Office
Office européen des brevets

(11) EP 2 583 820 A1

(12) EUROPEAN PATENT APPLICATION

(43) Date of publication:
**24.04.2013 Bulletin 2013/17**

(21) Application number: **11008361.5**

(22) Date of filing: **18.10.2011**

(51) Int Cl.:
***B32B 7/00*** *(2006.01)*
***B41M 5/00*** *(2006.01)*
***C09C 1/30*** *(2006.01)*
***C09D 7/12*** *(2006.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **ILFORD Imaging Switzerland GmbH**
**1723 Marly 1 (CH)**

(72) Inventors:
- **Schär, Meinrad**
  **1731 Ependes (CH)**
- **Ruffieux, Vincent, Dr.**
  **1724 Le Mouret (CH)**

(74) Representative: **Herzog, Martin**
**Herzog Fiesser & Partner**
**Patentanwälte**
**Immermannstrasse 40**
**40210 Düsseldorf (DE)**

(54) **Biodegradable recording sheets for ink jet printing**

(57) The invention relates to a layer structure comprising a biodegradable substrate layer and a further layer connected to the substrate layer comprising a plurality of silicon oxide particles, a process for preparing such a layered structure and the layered structure obtainable by this process, a sheet, a film, a packaging material, a display material, or an inkjet recording material comprising at least one of the aforementioned layer structures, and the use of a silicon dioxide layer for smoothing the surface of a layer comprising at least one biodegradable polymer.

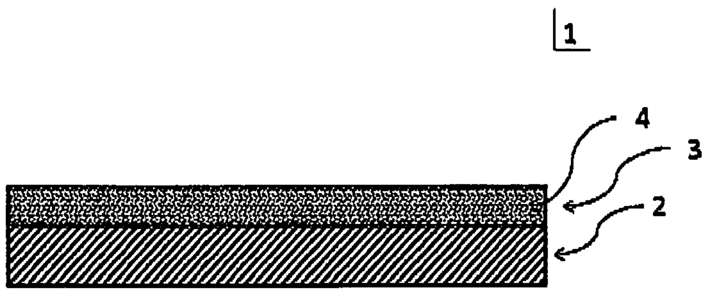


*Figure 1*



Printed by Jouve, 75001 PARIS (FR)

## Description

The invention relates to a layer structure comprising a biodegradable substrate layer and a further layer connected to the substrate layer comprising a plurality of silicon oxide particles, a process for preparing such a layered structure and the layered structure obtainable by this process, a sheet, a film, a packaging material, a display material, or an inkjet recording material, comprising at least one of the aforementioned layer structures, and the use of a silicon dioxide layer for smoothing the surface of a layer comprising at least one biodegradable polymer.

Environmentally degradable polymeric materials and plastics (also referred to as: EDP) have been known for some decades. Research in this field is motivated by a constantly increasing demand for environmentally sustainable products. Thus, there is an ongoing development of products, e.g. for product presentation, such as booths and displays with high-quality printed designs for trade fairs, advertising, marketing, ticketing and the like, but also for packaging for goods, where the products can be decomposed by micro-organisms present in the environment in a reasonable time. Though reasonable progress has been accomplished in the development of such products, these products are usually equipped with further items, such as layers providing a glossy surface, antistatic properties, sliding properties as well as further layers comprising a printed design that serves for identification and information on proper use of the contained or advertised article. These layers are nowadays often applied onto the product using standard techniques, which involve processes and materials that are not environmentally sustainable.

In the desire for the development of completely environmentally sustainable products, attention now focuses on the aforementioned layers, e.g. layers onto which images and designs can be printed while maintaining a high printing quality. However, it is now desirable to provide layers which are applied onto the aforementioned products and which exhibit similar biodegradability properties to the product itself.

Accordingly, there is an ongoing need to improve today's imaging recording materials, which are applied onto the aforementioned products and packaging materials. Further, there is a need to improve the processes which are used to apply these layers onto these products and packaging materials.

Accordingly, an object of the invention is to provide materials which are suitable for use with trade show displays, advertising, marketing and ticketing articles and the like, which are to a large extent or even completely biodegradable, while also having further properties such as ease of application and quality of the printing on the material.

Another object of the invention is to provide a biodegradable film, onto which printings can be performed using environmentally more friendly processes than those of present day industrial standards.

Another object of the invention is to provide a biodegradable film, which has a high gloss, A good printing image quality is further appreciated.

A further object of the invention is to provide a process for applying a biodegradable film onto a biodegradable substrate. Preferred biodegradable substrates should have a certain resistance to the atmosphere and to humidity and water, respectively, in order to be suitable as the above-mentioned types of products and materials.

Surprisingly, the use of layers comprising silicon oxide particles, preferably positively charged silicon oxide particles has been found to solve at least one of the objects mentioned above. Further, films made from biodegradable polymer appear to be suitable base materials for the construction of trade show displays, advertising articles and the like, as well as packaging. It is a further benefit of the layer structures of the invention, and thus articles comprising these layer structures, that these articles usually do not contain PVC. This assures ease of disposal of the articles after use. Further, it has been found that known inkjet technology can be used to print on the layer structures of the invention, whereby high quality printings are obtainable.

Further, it has been found that an environmentally acceptable process for printing on such biodegradable polymers equipped with layers of silicon oxide particles is the inkjet technology using water-based printing systems, e.g. inks

A contribution to the solution of at least one of the above objects is provided by the subject matters of the category-forming claims, whereby the dependent sub-claims of the category-forming independent claims represent preferred aspects of the invention, whose subject matters likewise make a contribution to solving at least one of the objects mentioned above.

A first aspect of the invention is a layer structure comprising

(a) a biodegradable substrate layer;
(b) a further layer connected to the biodegradable substrate layer comprising a plurality of silicon oxide particles.

The term biodegradable is used in the present context to characterise an item or system which may be subjected to biodegradation, i.e. which can be broken down, dissolved, or otherwise disintegrated by environmental, in particular biological means, such as by enzymes or micro-organisms, e.g. bacteria. The biodegradable properties of an item can be tested according to internationally accepted standards, e.g. ASTM D5511.

The term connected is used in the present context to describe two layers that adhere together. In general,

numerous means and techniques enter into the consideration of those skilled in the art to connect two layers, which are known and appear proper. Preferably, two layers may be connected by electrostatic interactions, chemical bonding, Van-der-Waals forces, or a combination of at least two thereof.

A layer structure according to the invention implies a plurality comprising two or more layers, in which at least a part of a layer is interconnected with at least a part of at least one adjacent layer.

According to an aspect of the invention, the biodegradable substrate layer comprises at least one polymer. Numerous of the known polymers enter into the consideration of those skilled in the art. Preferably, the polymer is comprised in the biodegradable substrate layer. Preferably, the polymer is selected from the group consisting of aliphatic polyesters such as polycaprolactone, poly($\beta$-propiolactone), poly(hydroxyalkanoate), poly(hydroxybutyrate), poly(glycolic acid), poly($\beta$-malic acid), poly(alkylene succinate)s, poly(butylene succinate), poly(lactide)s, starch blends, poly(p-dioxanone), acetyl cellulose with low degree of acylation, poly(vinyl alcohol)s, polyamides, poly(amino acids), pseudopoly ($\alpha$-amino acids), poly($\alpha$-amino acid ester), copolyesters, copolyamides, poly(ester amides), poly(ester ureas), poly(iminocarbonates), polyanhydrides, poly(ethylene glycol)s, poly(orthoester)s, polyphosphazenes, polyurethanes, poly(ester urethane), poly(ether urethane), poly(urethane urea)s, polystyrene, polyolefines such as polypropylene, aliphatic-aromatic copolyesters such as copolyesters of polycaprolactone and poly(ethylene terephthalate), copolyesters of polycaprolactone and poly(butylene terephthalate), copolyesters of polycaprolactone and poly(ethylene isophthalate), copolyesters of adipic acid and terephthalic acid, copolyesters of 1,4-butanediol, adipic acid and terephthalic acid, or a combination of at least two thereof.

Of the polymers mentioned above, starch blends, acetyl cellulose with low degree of acylation, poly(lactide)s, polyolefines, polyesters, polystyrene, such as polypropylene are particularly preferred.

According to a further aspect of the invention, at least one polymer and at least one enzyme are comprised in the biodegradable substrate layer. The polymer is preferably selected from the polymers listed above. Preferably, the polymer itself is biodegradable. Numerous of the known biodegradable polymers enter into the consideration, including some of the polymers mentioned above. Those skilled in the art will easily identify those polymers in the list above which are biodegradable.

Under the provision detailed in the preceding paragraph, numerous of the known enzymes enter into the consideration. Preferably, the at least one enzyme is selected from the group consisting of hydrolases, oxidases, peroxidases, lipases, esterases, proteinases, amylases, cellulases, or a combination of at least two thereof. Suitable combinations of polymers and enzymes are known to the skilled person from the above lists in order to come to a layer structure comprising at least one polymer and at least one enzyme, wherein the substrate layer, more preferably the layer structure, is biodegradable. Of the enzymes mentioned above, hydrolases, esterases, and amylases are particularly preferred.

According to a further aspect of the invention, the layer structure comprises at least one polymer and at least one enzyme, the at least one polymer and the at least one enzyme preferably being present in a weight ratio of from 99.9999:0.0001 to 90:10, preferably in a weight ratio of 99.999:0.001 to 99:01, more preferably in a weight ratio of 99.99: 0.41 to 99.5:0.5, yet more preferably in a weight ratio of 99.9:0.1 to 99.7:0.3, based on the total weight of the at least one polymer and the at least one enzyme.

According to a further aspect of the invention, the at least one enzyme is capable of breaking at least one bond in the polymer chain of the polymer.

According to a further aspect of the invention, the biodegradable substrate layer may comprise a biodegradable polymer and a further polymer, preferably as a polymer blend. As biodegradable polymers preferred are those mentioned above, yet more preferably a biodegradable aliphatic polyester such as polycaprolactone. The further polymer is preferably selected from the group consisting of: low density polyethylene, polypropylene, polystyrene, nylon 6, poly(ethylene terephthalate) and poly(hydroxybutyrate). According to another preferred aspect, the biodegradable polymer is poly (hydroxybutyrate) and the further polymer is selected from the group consisting of: poly(butylene adipate), poly(vinyl acetate) or mixtures thereof.

According to another preferred aspect, blends of poly(ethylene) and starch blends are comprised in the substrate layer.

According to a further aspect of the invention, the biodegradable substrate layer has a biodegradability determined according to ASTM D5511 of at least 1% in 45 days, preferably of at least 2% in 45 days, more preferably of at least 3% in 45 days, yet more preferably of at least 3.5% in 45 days.

According to a further aspect of the invention, the biodegradable substrate layer is transparent, opaque or non-transparent. If the biodegradable substrate layer is produced from one or more of the aforementioned polymers, the biodegradable substrate layer is usually transparent.

Opaque biodegradable substrate layers can be obtained by blending inorganic particles into the biodegradable substrate layer, preferably into the polymer of the biodegradable substrate layer. Preferred inorganic particles are selected from the group consisting of siliceous clays, such as kaolin clay, titanium dioxide, barium sulfate, calcium sulfate calcium carbonate, magnesium silicate (talc), zinc oxide, diatomaceous earth and mixtures thereof. Alternatively, an opaque

biodegradable substrate layer can be obtained by incorporating gas bubbles, such as air, within the biodegradable substrate layer.

Non-transparent biodegradable substrate layers can be obtained by blending large amounts of inorganic particles, carbon black or both into the biodegradable substrate layer, preferably into the polymer of the biodegradable substrate layer.

The layer structure according to the invention also comprises a further layer connected to the substrate layer comprising a plurality of silicon oxide particles.

Two major processes are widely used to produce silicon oxide particles of small particle size. In the first process, a precipitation in a wet process (precipitated silicon dioxide) is performed. In the second process, a gas phase reaction yields the desired silicon oxide particles (fumed silicon dioxide). The fumed silicon dioxide is generally prepared by flame pyrolysis, for example by burning silicon tetrachloride in the presence of hydrogen and oxygen. A variety of commercial products of fumed silicon dioxides is offered under the tradename Aerosil® from Evonik Industries AG, Essen, Germany. Another commercial product is Cab-O-Sil® M-5, available from Cabot Corporation, Billerica, USA.

According to a further aspect of the invention, the silicon oxide particles, which are present in the further layer, have an primary particle size in the range of from 1 to 499 nm, preferably in the range of from 1 to 300 nm, preferably in the range of from 2 to 200 nm, more preferably in the range of from 5 to 100 nm, yet more preferably in the range of from 5 to 50 nm, even more preferably in the range of from 6 to 40 nm, or in the range of from 5 to 30 nm, most preferably in the range from 7 to 25 nm. Particles of aforementioned size ranges are often referred to as "nanoparticles". Primary particle size can calculated from BET surface area measurements.

According to another aspect of the invention, the silicon oxide particles, which are present in the further layer, have an average particle diameter $d_{50}$ in the range of from 0.5 to 1000 $\mu$m, preferably in the range of from 1 to 800 $\mu$m, more preferably in the range of from 1 to 500 $\mu$m, yet more preferably in the range of from 1 to 300 $\mu$m, even more preferably in the range of from 1 to 200 $\mu$m, or in the range of from 1 to 100 $\mu$m, most preferably in the range of from 1 to 50 $\mu$m. Particles of aforementioned size ranges are often referred to as "microparticles". The average particle diameter dso is defined as the diameter where 50 mass-% (of the particles) of the sample have a larger diameter, and the other 50 mass-% have a smaller diameter. The particle diameter can be measured using various techniques, e.g. using a centrifugal sedimentation particle size analyzer.

According to a further aspect of the invention, the silicon oxide, which is present in the further layer, has a specific surface area in the range of from 20 $m^2/g$ to 600 $m^2/g$, preferably in the range of from 50 $m^2/g$ to 550 $m^2/g$, more preferably in the range of from 70 $m^2/g$ to 500 $m^2/g$, yet more preferably in the range of from 100 $m^2/g$ to 400 $m^2/g$.

According to a further aspect of the invention, the silicon oxide particles, which are present in the further layer, have a positively charged surface. A surface of an item, e.g. a silicon oxide particle, is considered positively charged at the surface, when the zeta potential of the item is larger than 0 mV. Preferably the surface of suitable silicon oxide has a zeta potential of more than 20 mV.

Usually, the surface of silicon oxide particles are negatively charged. For certain applications, such as fixation of colouring compounds comprised in inks, it appears advantageous to modify the surface of silicon oxide particles in such a way that the surface becomes positively charged. Aforementioned colouring compounds of inks adhere usually stronger to silicon oxide particles having a positively charged surface than to those silicon oxide particle having a neutral or negatively charged surface.

According to a further aspect of the invention, the silicon oxide particles, which are present in the further layer, may further comprise a compound selected from the group consisting of trivalent aluminium compounds, tetravalent zirconium compounds, aminoorganosilane compounds, reaction products of at least one trivalent aluminium compound with at least one aminoorganosilane compound, reaction products of at least one tetravalent zirconium compound with at least one aminoorganosilane compound, reaction products of at least one trivalent aluminium compound and at least one tetravalent zirconium compound with at least one aminoorganosilane compound and combinations thereof.

Preferably, the modification of the silicon oxide particles is performed at least on the surface of the particles. Accordingly, the silicon oxide particles, which are present in the further layer, comprise at least one of the aforementioned compounds at least on the surface of the particles. Another preferred aspect of the invention relates to such a modification, which can be performed on the surface and in cavities of the particles, particle agglomerates or both. Accordingly, the silicon oxide particles, which are present in the further layer, comprise at least one of the aforementioned compounds at least on the surface and in at least some cavities of the particles.

A silicon oxide particle, the surface of which has been modified by a treatment with aluminium chlorohydrate, is a preferred silicon oxide particle having a positively charged according to the invention.

A silicon oxide particle, the surface of which has been modified by a treatment with an aminoorganosilanc, is another preferred silicon oxide particle having a positively charged surface according to the invention.

A silicon oxide particle, the surface of which has been modified by a treatment with the reaction products of a compound of trivalent aluminium (such as aluminium chlorohydrate) or tetravalent zirconium (such as zirconium oxychloride, zirconium carbonate, zirconium acetate or zirconium lactate) or both, preferably reacted with at least one

aminoorganosilane, is another preferred silicon oxide particle having a positively charged surface according to the invention.

Of the available types of silicon oxide particles, fumed silicon oxide particles, which are also known as fumed silicon dioxide, are preferred. Accordingly, aforementioned silicon oxide particle having a positively charged surface are preferably based on fumed silicon oxide particles.

In the preparation of such surface modified silicon oxide particles, fumed silicon dioxide, for example, is added at high shear rates to a mainly aqueous solution containing the reaction products of a compound of trivalent aluminium (e.g., aluminium chlorohydrate), preferably reacted with at least one aminoorganosilane. Under suitable conditions, a dispersion of surface modified fumed silicon oxide particles is obtained that does not coagulate. The mixture containing the reaction products of a compound of trivalent aluminium (such as aluminium chlorohydrate) with at least one aminoorganosilane has a high buffer capacity. The alkaline aminoorganosilane neutralizes hydrochloric acid formed during hydrolysis of the compound of trivalent aluminium (e,g., aluminium chlorohydrate). The required quantity of the compound of trivalent aluminium (e.g., aluminium chlorohydrate) for the surface modification of silicon dioxide is much lower in comparison to a modification with aluminium chlorohydrate only.

These surface modified dispersions of silicon oxide particles have a much lower salt content in comparison to dispersions where the surface has been modified with aluminium chlorohydrate.

The reaction products used in the surface modification step of a compound of trivalent aluminium (e.g., aluminium chlorohydrate) with at least one aminoorganosilane may be prepared by the addition of the aminoorganosilane to an aqueous solution of the compound of trivalent aluminium (e.g., aluminium chlorohydrate) or vice versa. The reaction of the compound of trivalent aluminium with the aminoorganosilane is usually carried out at temperatures from 10° C. to 50° C. for 5 minutes to 60 minutes. Preferably, the reaction is carried out at room temperature for 10 minutes to 15 minutes.

The modification of the surface of the silicon oxide particles with the reaction products of a compound of trivalent aluminium (e.g., aluminium chlorohydrate) with at least one aminoorganosilane is a faster process than the surface modification of silicon oxide particles with aluminium chlorohydrate. Accordingly, the modification time may be shortened or the modification temperature may be lowered in the case where the surface of the silicon dioxide is modified with the reaction products of a compound of trivalent aluminium (e.g., aluminium chlorohydrate) with at least one aminoorganosilane.

Of the silicon oxide particles available, particles of fumed silicon dioxide are particularly preferred for the surface modification with the reaction products of a compound of trivalent aluminium (e.g., aluminium chlorohydrate) with at least one aminoorganosilane.

Instead of a single fumed silicon dioxide powder, a mixture of different silicon dioxide powders having different sizes of the primary particles may be used. The modification step with the reaction products of a compound of trivalent aluminium (e.g., aluminium chlorohydrate) with at least one aminoorganosilane may be carried out individually for each silicon dioxide powder or simultaneously with the mixture of the different silicon dioxide powders.

If the modification step is carried out at high shear rates, the reaction products are regularly distributed on the surface of the silicon dioxide. Furthermore, the rheological behaviour of the dispersion is improved.

Preferred compounds of trivalent aluminium are aluminium chloride, aluminium nitrate, aluminium acetate, aluminium formiate and aluminium chlorohydrate.

Suitable aminoorganosilanes are aminoorganosilanes of formula (I)

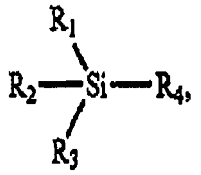

(I)

wherein $R_1$, $R_2$, $R_3$ independently represent hydrogen, hydroxyl, unsubstituted or substituted alkyl radicals having from 1 to 6 carbon atoms, unsubstituted or substituted aryl radicals, unsubstituted or substituted alkoxyl radicals having from 1 to 6 carbon atoms or unsubstituted or substituted aryloxyl radicals. $R_4$ represents an organic moiety substituted by at least one primary, secondary or tertiary amino group.

In the case where one or more of $R_1$, $R_2$ and $R_3$ are substituted, the substituents are independently selected from the group consisting of thiol, sulfide and polyalkylene oxide. Suitably selected substituents facilitate the surface modification of silicon dioxide (improved rheological behavior of the dispersions and of the coating solutions) and improve the permanence properties of the further layer, such as stability against air pollutants, light stability and physical properties.

Condensation products of aminoorganosilanes may also be used in place of aforementioned monomeric aminoorganosilanes. The condensation reactions may occur between identical or different aminoorganosilanes.

Numerous of the known aminoorganosilanes enter into the consideration of those skilled in the art. Preferred aminoorganosilanes for the surface modification of fumed silicon dioxide resulting in silicon oxide particles having a positively charged surface are 3-aminopropyltrimethoxysilane, N-(2-aminoethyl)-3aminopropyltrimethoxysilane, (3-triethoxysilylpropyl)-diethylentriamine, 3-aminopropyltriethoxysilane, N-(2-amino-ethyl)-3-amino-propyltriethoxysilane, (3-triethoxysilylpropyl)-diethylenetriamine and mixtures of at least two of these aminoorganosilanes.

In a further preferred aspect of the invention, the aminoorganosilane is reacted in solution with $CO_2$ under formation of an ammoniumorganosilane (i.e., protonated species of an aminoorganosilane) and hydrogen carbonate, before it is added to the solution of the trivalent aluminium compound (e.g., aluminium chlorohydrate). In this way, the pH of the reaction mixture containing the reaction products of a compound of trivalent aluminium (e.g., aluminium chlorohydrate) with at least one aminoorganosilane is lowered and the buffer capacity of the mixture is increased. The formation of undesirable, partially insoluble aluminium by-products of very high molecular weight can be reduced using this procedure.

A silicon oxide particle, the surface of which has been modified by a treatment with the reaction products of at least one tetravalent zirconium compound (e.g., zirconium oxychloride, zirconium carbonate, zirconium acetate, zirconium lactate), preferably at least one tetravalent zirconium compound reacted with at least one aminoorganosilane, or at least one tetravalent zirconium compound combined with at least one trivalent aluminium compound of the above and both reacted with at least one aminoorganosilane, is another preferred silicon oxide particle having a positively charged surface according to the invention.

The preparation of such surface modified silicon oxide particles is performed similar to the aforementioned preparation of surface modified silicon oxide particles modified with the reaction product of a trivalent aluminium compound, but instead of the trivalent aluminium compound a tetravalent zirconium compound, or at least one tetravalent zirconium compound reacted with at least one aminoorganosilane, or at least one tetravalent zirconium compound combined with at least one trivalent aluminium compound of the above and reacted with at least one aminoorganosilane, is used.

According to a further aspect of the invention, the further layer has a thickness of from 5 $\mu$m to 70 $\mu$m, preferably 10 $\mu$m to 50 $\mu$m, or from 30 $\mu$m to 50 $\mu$m.

According to a further aspect of the invention, the further layer comprises an amount of silicon oxide particles in a range of from 5 g/$m^2$ to 70 g/$m^2$, preferably from 7 g/$m^2$ to 40 g/$m^2$, or from 10 g/$m^2$ to 30 g/$m^2$, or from 15 g/$m^2$ to 25 g/$m^2$.

According to a further aspect of the invention, an intermediate layer is arranged between the biodegradable substrate layer and the further layer. That way, the biodegradable substrate layer is connected to the intermediate layer by aforementioned means and techniques. Independently from the type of the previously mentioned connection, the intermediate layer is also connected to the further layer by aforementioned means and techniques.

According to a further aspect of the invention, the further layer comprises at least one binder. Numerous types of the binders known in the art enter into the consideration of the skilled person.

According to a further preferred aspect of the invention, the amount of binder per 100 parts of silicon oxide particles in the further layer is in the range of from 5 parts to 50 parts, or from 10 parts to 40 parts, or from 15 parts to 30 parts of binder, each calculated per 100 parts of silicon oxide particles.

Suitable Binders are often water-soluble polymers. Especially preferred are film-forming polymers.

A preferred group of binders are water-soluble polymers that are natural polymers and modified products thereof, such as albumin, gelatin, casein, starch, gum arabicum (i.e., natural rubber), sodium alginate, potassium alginate, hydroxyethyl cellulose, carboxymethyl cellulose, $\alpha$-cyclodextrine, $\beta$-cyclodextrine or $\gamma$-cyclodextrine and the like, or combinations of at least two of these polymers.

A preferred natural binder is gelatin. If the water-soluble polymer is gelatin, all known types of gelatin may be used as for example acid pigskin or limed bone gelatin, acid or base hydrolyzed gelatin, but also derivatised gelatins like for instance phthalaoylated, acetylated or carbamoylated gelatin, or gelatin derivatised with the anhydride of trimellitic acid.

Further, a combination of at least two of the aforementioned natural binders may be used.

A second preferred group of binders are water-soluble polymers that are synthetic binders. Of these, the following synthetic binders are preferred: polyvinyl alcohol, polyvinyl pyrrolidone, completely or partially saponified products of copolymers of vinyl acetate with other monomers; homopolymers or copolymers of unsaturated carboxylic acids such as maleic acid, (meth)acrylic acid or crotonic acid and the like; homopolymers or copolymers of sulfonated vinylmonomers such as vinylsulfonic acid, styrene sulfonic acid; homopolymers or copolymers of vinylmonomers of (meth) acrylamide; homopolymers or copolymers of other monomers with ethylene oxide; polyurethanes; polyacrylamides; water-soluble nylon type polymers; polyesters; polyvinyl lactams; acrylamide polymers; substituted polyvinyl alcohol; polyvinyl acetals; polymers of alkyl and sulphoalkyl acrylates and methacrylates; hydrolysed polyvinyl acetates; polyamides; polyvinyl pyridines; polyacrylic acid; copolymers with maleic anhydride; polyalkylene oxides; copolymers with methacrylamide and copolymers with maleic acid. Derivatives of the aforementioned polymers are also preferred.

A preferred synthetic binder is polyvinyl alcohol. Polyvinyl alcohol with a degree of hydrolysis between 70% and 99%, in particular between 88% and 98%, and a weight average molecular weight between 14,000 g/mol and 300,000 g/mol, in particular between 100,000 g/mol and 200,000 g/mol, is preferred; another preferred aspect of the invention are mixtures of at least two polyvinyl alcohols which differ in at least one of the properties selected from the group consisting of: degree of hydrolysis, weight average molecular weight, or both. Properties, such a weight average molecular weight and degree of hydrolysis are provided as technical information by the manufacturer of the polyvinyl alcohol.

According to another preferred aspect of the invention, a combination of at least two of the aforementioned synthetic binders may be used. Further, a combination of at least one of the aforementioned synthetic binders and at least one of the aforementioned natural binders may be used.

According to another aspect of the invention, the binder may be blended with water insoluble natural or synthetic high molecular weight compounds, such as acrylate latices or with styrene acrylate latices. Accordingly, water insoluble polymers may be used as binder, or at least as part of a binder of the invention.

Preferably, the binder is selected from the group consisting of polyvinyl alcohol and its derivatives, gelatine and its derivatives, polyvinyl pyrrolidone and its derivatives and mixtures of at least two aforementioned binders.

According to a further aspect of the invention, the layer structure further comprises a coloured layer adjacent to the further layer which partially or completely covers the surface of the further layer. The coloured layer is located on that side of the further layer, which is facing away from the substrate layer.

According to a further aspect of the invention, the coloured layer comprises at least one pigment.

According to a further aspect of the invention, the further layer of the layer structure is at least partially coloured. In this case, at least a part of the colouring agent is located in the further layer whereby colouring the further layer. i.e., this can be achieved by applying a dye to the further layer.

A further aspect of the invention is a process for preparing a layer structure, comprising at least the process steps

(A) providing a biodegradable substrate layer, preferably comprising at least one polymer and at least one enzyme; and

(B) applying a further layer comprising a plurality of silicon oxide particles to the biodegradable substrate layer.

As biodegradable substrate layer, polymer, enzyme and silicon oxide particles in the process of the invention can be used those biodegradable substrate layers, polymers, enzymes and silicon oxide particles that were described with regard to the first aspect of the invention, i.e. the layer structure. Preferred aspects with respect to the first aspect of the invention are also preferred aspects with regard to aforementioned process.

According to a further aspect of the invention, the further layer is applied in step (B) of the process from a dispersion comprising the silicon oxide particles and a liquid. In the present context, the term dispersion describes a system, in which a discontinuous phase of particles of at least a first component are dispersed in a continuous phase of at least a further component. The continuous phase is not in the same physical state as the discontinuous phase. Both, continuous and discontinuous phase, can independently of each other comprise one or more components.

According to a further aspect of the invention, the silicon oxide particles of the process have a primary particle size in the range of from 1 to 499 nm. Further preferred aspects are described with regard to the first aspect of the invention and incorporated herein.

According to another aspect of the invention, the silicon oxide particles of the process have an average particle diameter $d_{50}$ in the range of from 0.5 to 1000 $\mu$m. Further preferred aspects are described with regard to the first aspect of the invention and incorporated herein.

According to another aspect of the invention, the silicon oxide particles of the process have a positively charged surface. Further preferred aspects are described with regard to the first aspect of the invention and incorporated herein.

According to another aspect of the invention, the silicon oxide of the process has a specific surface area in the range of from 20 $m^2/g$ to 600 $m^2/g$. Further preferred aspects are described with regard to the first aspect of the invention and incorporated herein.

According to another aspect of the invention, the silicon oxide particles of the process comprise a compound selected from the group consisting of trivalent aluminium compounds, tetravalent zirconium compounds, aminoorganosilane compounds, reaction products of at least one trivalent aluminium compound with at least one aminoorganosilane compound, reaction products of at least one tetravalent zirconium compound with at least one aminoorganosilane compound, reaction products of at least one trivalent aluminium compound and at least one tetravalent zirconium compound with at least one aminoorganosilane compound, and combinations thereof. Further preferred aspects are described with regard to the first aspect of the invention and incorporated herein. This applies also to the way, how the modification of silicon oxide particles can be performed.

Numerous of the known liquids, and also mixtures thereof, enter into the consideration as continuous phase of the aforementioned dispersion. According to an aspect of the invention, the liquid is selected from the group consisting

of water, alcohols, and mixtures thereof. Preferably, water is selected as liquid. Yet more preferred, the dispersion obtained from the surface modification of silicon oxide particles is used directly for the preparation of that dispersion, which is applied to form the further layer in step (B) of the process.

According to another aspect of the invention, the dispersion comprises at least one binder. Further preferred aspects are described with regard to the first aspect of the invention and incorporated herein.

According to a further aspect of the invention, the dispersion of the process may comprise additional components, such as pH regulating substances, antioxidants, stabilizers, anti-fouling agents, preservatives, rheology modifiers such as thinners and/or thickeners, film forming agents, cross-linkers, fillers, UV stabilizers and optical brightening agents (often referred to as: OBA). Aforementioned additional components of the dispersion of the process may be added to the dispersion as aqueous solutions. If one or more of these compounds are not sufficiently water-soluble, they may be incorporated into the dispersion by other common techniques known in the art, e.g., these compounds may be dissolved in a water miscible solvent such as lower alcohols, glycols, ketones, esters, or amides. Alternatively, the compounds may be added to the dispersion of the process as fine dispersions, as emulsion, or as cyclodextrine inclusion compounds, or incorporated into latex particles yet forming a further group of particles in the dispersion of the process.

In the art, numerous techniques are known to apply a layer comprising particles to a substrate layer. Accordingly, those skilled in the art will identify appropriate techniques for applying a further layer comprising a plurality of silicon oxide particles to the biodegradable substrate layer in step (B) of the process.

According to a further aspect of the invention, the further layer is applied in process step (B) by extrusion coating, air knife coating, doctor blade coating, cascade coating or curtain coating. The further layer may also be applied using spray techniques. Moreover, additional layers may be built up onto the further layer from several individual layers that may be coated one after the other or simultaneously. It is even possible to coat a support on both sides with a further layer or additional layers, or both. It is further preferred to coat an antistatic layer or an anticurl layer on the side of the substrate layer, which is facing away from the further layer. Preferred coating procedures to apply the further layer in step (B) are cascade coating or curtain coating, wherein the further layers, and possibly other additional layers are coated simultaneously onto the substrate layer. The cited coating methods, however, are not to be considered limiting the invention.

According to a further aspect of the invention, the process of the invention for preparing a layer structure comprises a process step (C) applying a pigment or a, preferably organic, colouring agent, or both to the further layer, which was obtained in process step (B), to obtain a further layer, which is at least partially coloured.

According to a further aspect of the invention, at least process step (C) is carried out by means of ink-jet printing. Common ink jet printing techniques are continuous ink jet (CIJ), thermal drop-on-demand inkjet (thermal DOD) and piezoelectric drop-on-demand inkjet (piezoelectric DOD), which are preferred in the invention.

A further aspect of the invention is related to a layered structure obtainable by the process of the invention described above.

According to a further aspect of the invention, each of the above mentioned biodegradable layer structures of the invention shows at least the following properties:

i) a biodegradability determined according to ASTM 5511 of at least 1% in 45 days, preferably of at least 2% in 45 days, more preferably of at least 3% in 45 days, yet more preferably of at least 3.5% in 45 days; or
ii) a colour density in the range of from 0.01 to 3,5, determined according to ISO 5-3 and ISO 5-4 for non-transparent biodegradable layer structures and according to ISO 5-3 and ISO 5-2 for transparent and opaque biodegradable layer structures; the colour density measured on that side of the substrate layer, onto which the further layer is located.
iii) or both, i) and ii).

A further aspect of the invention is related to a sheet, a film, a packaging material, a display material or an inkjet recording material comprising a aforementioned layer structure.

A further aspect of the invention is related to the use of a silicon dioxide layer for smoothing the surface of another layer comprising at least one biodegradable polymer, the other layer comprising preferably at least one polymer and at least one enzyme.

DESCRIPTION OF THE FIGURES

The subject matter of the invention is exemplified in the figures. The figures, however, are not intended to limit the scope of the invention or the claims in any way.

Referring to Figure 1, a layered structure (1) is shown. The layered structure comprises a biodegradable substrate layer (2) and a further layer (3). The further layer comprises silicon oxide particles (4).

Referring to Figure 2, another layered structure (1) is shown. As in Figure 1, the layered structure comprises a biodegradable substrate layer (2) and a further layer (3). The further layer comprises silicon oxide particles (4). In a

preferred aspect (optional), an additional layer (5), such as an adhesion promoting layer, can be located between the biodegradable substrate layer (2) and the further layer (3). In a further preferred aspect (optional), another additional layer (6), such as an coloured pigment layer or a UV protecting layer or the like, can be located on the side of the further layer, which is facing away from the biodegradable substrate layer (2).

In Figure 3, the process of the invention is shown.

The following Examples serve for exemplary elucidation of the invention and are not to be interpreted as a restriction.

TEST METHODS

A. SPECIFIC SURFACE

The specific surface area is determined by the BET isotherm method, as described by S. Brunauer, P.H. Emmet and J. Teller in "Adsorption of Gases in Multimolecular Layers", Journal of the American Chemical Society 60, p. 309-319 (1938).

B, BIODEGRADATION

The biodegradable properties of an item are determined according to ASTM D5511-02, which is an equivalent of ISO 15985.

C. PARTICLE SIZE

*Primary particle-size (PPS) of fumed silica*

The primary particle size of fumed silica is derived from the BET specific surface given by the manufacturer, according to the formula

$$pps = \frac{6}{BET \cdot \varphi_{SiO_2}}$$

where *pps* is the primary particle size, BET is the specific surface and $\varphi_{SiO2}$ is the specific gravity of fumed silica ($2.2 g/cm^3$). (NIP22 Final Program and Proceedings, p.448, 2006).

*Average particle size of precipitated silica*

The average particle size of precipitated silica is given according to the product data sheet provided by the manufacturer. In the case of Grace Davison Syloïd products, the average particle size is determined using a Malvern Mastersizer 2000 equipment.

B. THICKNESS OF AN ITEM, E.G. A LAYER

The thickness of an item, e.g. a layer, is determined by optical microscopy. Samples are prepared by a cut of the sample using a microtome.

C. COLOUR DENSITY

The colour density of a layer structure is determined according to ISO standards.

If the transmittance density is determined, e.g. for non-transparent layer structures, the measurements are performed according to ISO 5-3 and ISO 5-4.

If the reflection density is determined, e.g. for transparent or opaque layer structures, the measurements are performed according to ISO 5-3 and ISO 5-2.

D. SURFACE CHARGE MEASUREMENTS

Zeta-potential measurements were carried out to determine the surface charge of silicon oxide particles using

a Dispersion Technology DT1200 device, at a $SiO_2$ concentration of 10 wt-%. The procedure described on p. 25 of the DT1200 User Manual (2003) was exactly followed.

E. GLOSS

Gloss is measured according to norms ISO 2813 and ISO 15994 with a glossmeter Micro-TRI-Gloss®, available from BYK Gardner, Columbia, USA. Values are given for three geometries at 20°, 60° and 85°.

F. VOLUME OF COLOUR SPACE

Patches of the colors yellow (Y), red (R), magenta (M), blue (B), cyan (C), green (G) and black (3K) at 100% print density were printed onto the uncoated polystyrene base (comparative example) and onto the A4 sheets obtained from Example 1 and Example 2 with the ink jet printers EPSON R360 (Claria dye-based inks, Printer settings: premium glossy photo paper, high speed, color matching, photo rpm) and Epson R2400 (Ultrachrome 3K pigmented inks, Printer settings: premium glossy photo paper, high speed, color matching, photo rpm), using original inks. The media sheets were left during 24 hours at 21°C and 55%rH to allow the ink to dry. Then the L*a*b* color coordinates of the colors yellow, red, magenta, blue, cyan, green, black and white were measured with a X-Rite 310X densitometer and the volume of the color space L*a*b*formed by these eight colors was calculated using the formulae of G. Wys-zecki and W. Stiles in "Color Science Concepts and Methods, Quantitative Data and Formulae", John Wiley & Sons, 2nd edition 1982, ISBN 0-471-02106-7, pages 164-169 and page 829.

EXAMPLES

Example 1

*Biodegradable polymer base*

The biodegradable base used in this example was provided by Transilwrap Company, Inc. (Franklin Park, USA). It is a polystyrene base with a thickness of 220μm according to the information provided by the manufacturer.

*Dispersion containing cationically modified fumed silica*

281g of aluminiumchlorhydrate (Locron P, Clariant AG, Muttenz, Schweiz) are mixed at room temperature (T=20 °C) with 29.5kg deionised water. Then, 612g butyl-aminopropyltrimethoxysilane (Evonik, Dusseldorf, Germany) were added and the solution was stirred vi-gourously during 5 minutes. Finally, 9.6kg of fumed silica (Cabot Cab-O-Sil M5, 200m$^2$/g corresponding to a primary particle size of 13.6nm, Cabot Corp., Billerica, USA) were slowly added under stirring at 3500rpm with an Ystral Conti TDS dispersing device. After all the silica powder was added, stirring was lowered to 1500rpm and the temperature was raised at 1°C/min, up to 50°C. After 30 minutes at 50°C, the dispersion was allowed to cool to room temperature at 1°C/min. 40kg of a dispersion containing 24 wt.-% of cationically modified fumed silica were obtained. The pH of the dispersion is 5.3. The zeta-potential is 31mV.

*Coating solution containing cationically modified fumed silica*

To this dispersion 24kg of an 8 wt.% solution of Mowiol 4088 ($M_w$ = 205000g/mol, $P_w$ = 4200, hydrolysis degree 88%, Clariant AG, Muttenz, Schweiz) and 9.94kg of a 5.26 wt.% solution of the surfactant Olin 10G (Olin Corp., Clayton, USA) were slowly added. Finally, 244g of boric acid were added under continuous stirring. This coating solution contains 12.9 wt.-% cationically modified fumed silica.

*Coating process*

On the polystyrene base described above, 155g/m$^2$ of the coating solution described above was coated with a slide-bead coating device at a temperature of 40°C and a constant speed of 20m/mm.

*Drying*

After cooling at 2°C for 20 seconds, the coated material was dried at 35°C and 10%rH for 30 seconds then at 45°C and 15%rH for 70 seconds, and finally at 52°C and 15%rH during 30 seconds.

*Results*

The final coated material contains 20g/$m^2$ cationically-modified fumed silica and the ratio between the binder and the silica is 20 parts binder per 100 parts silica. From the coated roll, A4 sheets were cut for testing.

Example 2

*Biodegradable polymer base*

The biodegradable base used in this example is the same as used in Example 1.

*Dispersion containing cationically modified precipitated silica*

420g of aluminiumchlorhydrate (Locron P, Clariant AG, Muttenz, Schweiz) are mixed at room temperature (T=20 °C) with 28.8kg deionised water. Then, 768g butyl-aminopropyltrimethoxysilane (Evonik, Düsseldorf, Germany) were added and the solution was stirred vigourously during 5 minutes. Finally, 10kg of precipitated silica (Grace Davison Syloïd C807, particle size 6.7-7.9μm, Columbia, USA) were slowly added under stirring at 3500rpm with an Ystral Conti TDS dispersing device. After all the silica powder was added, stirring was lowered to 1500rpm and the temperature was raised at 1°C/min. up to 50°C. After 30 minutes at 50°C, the dispersion was allowed to cool to room temperature at 1°C/min. 40kg of a dispersion containing 25wt.-% cationically modified precipitated silica were obtained. The pH of the dispersion is 6.1. The zeta-potential is 38mV.

*Coating solution containing cationically modified silica*

To this dispersion 26.3kg of an 8 wt.-% solution of Mowiol 4088 ($M_w$ - 205000g/mol, $P_w$ = 4200, hydrolysis degree 88%, Clariant AG, Muttenz, Schweiz) and 10.3kg of a 5.26 wt.-% solution of the surfactant Olin 10G (Olin Corp., Clayton, USA) were slowly added. Finally, 267.6g of boric acid were added under continuous stirring. This coating solution contains 13.0 wt.-% cationically modified precipitated silica.

*Coating process*

On the polystyrene base described above, 153.7g/$m^2$ of the coating solution described above was coated with a slide-bead coating device at a temperature of 40°C and a constant speed of 20m/min.

*Drying*

After cooling at 2°C for 20 seconds, the coated material was dried at 35°C and 10%rH for 30 seconds then at 45°C and 15%rH for 70 seconds, and finally at 52°C and 15%rH during 30 seconds.

*Results*

The final coated material contains 20g/$m^2$ cationically-modified precipitated silica and the ratio between the binder and the silica is 21 parts of binder per 100 parts of silica. From the coated roll, A4 sheets were cut for testing.

Testing results

**Gloss (20°, 60°, 85°)**

| | Example 1 | Example 2 | Base (uncoated) |
|---|---|---|---|
| Gloss at 20° | 3.7% | 1.4% | 1.6% |
| Gloss at 60° | 19.4% | 3.2% | 8.1% |
| Gloss at 85° | 58.4% | 10.7% | 12.3% |

**Color gamut and ISO optical density with Epson R360 (dye-based inks)**

| | Example 1 | | | | Example 2 | | | | Uncoated | | | |
|---|---|---|---|---|---|---|---|---|---|---|---|---|
| Color gamut | 329000 | | | | 262000 | | | | color overflow | | | |
| Optical density | C | | Y | 3K | C | M | Y | 3K | C | M | Y | 3K |
| | 0.47 | 1.06 | 1.32 | 2.21 | 0.43 | 1.05 | 1.26 | 1.63 | color overflow | | | |

By printing the uncoated base, a color overflow was observed. This means that the uncoated base cannot be printed with an aqueous dye-based ink. Both Examples yield excellent printed results with an aqueous dye-based ink.

**Color gamut and ISO optical density with Epson R2400 (pigmented inks)**

| | Example 1 | | | | Example 2 | | | | Uncoated | | | |
|---|---|---|---|---|---|---|---|---|---|---|---|---|
| Color gamut | 339000 | | | | 165000 | | | | color overflow | | | |
| Optical density | C | M | Y | 3K | C | M | Y | 3K | C | M | Y | 3K |
| | 0.65 | 1.34 | 1.13 | 2.14 | 0.49 | 0.96 | 0.98 | 1.18 | color overflow | | | |

By printing the uncoated base, a color overflow was observed. This means that the uncoated base cannot be printed with an aqueous pigmented ink. Both Examples yield excellent printed results with an aqueous pigmented ink.

## Biodegradability Tests

Examples 1 and 2 were subjected to biodegradability studies. For both examples, comparable biodegradability was observed as for the biodegradable uncoated polystyrene base used in Example 1 & 2.

REFERENCE NUMBERS

**[0126]**

(1) layer structure
(2) substrate layer
(3) further layer
(4) silicon oxide particles
(5) additional layer (optional)
(6) additional layer (optional)

## Claims

**1.** A layer structure (1) comprising

(a) a biodegradable substrate layer (2);
(b) a further layer (3) connected to the biodegradable substrate layer (2), comprising a plurality of silicon oxide particles (4).

**2.** The layer structure (1) according to claim 1, wherein the substrate layer (2) comprises at least one polymer and at least one enzyme.

**3.** The layer structure according to any of the preceding claims, wherein the silicon oxide particles (4) have a positively charged surface.

**4.** The layer structure (1) according to any of the preceding claims, wherein the silicon oxide particles (4) have a primary particle size in the range of from 1 to 499 nm.

5. The layer structure (1) according to any of claims 1 to 3, wherein the silicon oxide particles (4) have an average particle diameter $d_{50}$ in the range of from 0.5 to 1000 $\mu$m.

6. The layer structure (1) according to any one of the preceding claims, wherein the silicon oxide has a specific surface area in the range of from 20 $m^2/g$ to 600 $m^2/g$.

7. The layer structure (1) according to any of the preceding claims, wherein the further layer (3) comprises an amount of silicon oxide particles (4) in a range between from 5 $g/m^2$ to 70 $g/m^2$.

8. The layer structure (1) according to any one of the preceding claims, wherein the further layer (3) comprises at least one binder, the binder preferably selected from the group consisting of polyvinyl alcohol and its derivatives, gelatin and its derivatives, polyvinylpyrrolidone and its derivatives and mixtures of at least two thereof.

9. The layer structure (1) according to any one of the preceding claims, wherein the substrate layer (2) comprises the at least one polymer and the at least one enzyme in a weight ratio of from 99.9999:0.0001 to 90:10, based on the total weight of the at least one polymer and the at least one enzyme.

10. The layer structure (1) according to any one of the preceding claims, wherein the substrate layer (2) comprises at least one polymer selected from the group consisting of polystyrene, polyesters, polyolefines, polyamides and polylactides or a combination of at least two thereof.

11. The layer structure (1) according to any one of the claims 2 to 10, wherein the at least one enzyme is capable of breaking at least one bond in the polymer chain of the polymer.

12. The layer structure (1) according to any one of the claims 2 to 11, wherein the substrate layer comprises at least one enzyme selected from the group consisting of hydrolases, oxidases, peroxidases, lipases, esterases, proteinases, amylases, cellulases or a combination of at least two thereof.

13. The layer structure (1) according to any one of the preceding claims, wherein the substrate layer (2) has a biodegradability determined according to ASTM 5511 of at least 1% in 45 days.

14. The layer structure (1) according to any one of the preceding claims, further comprising a colour layer (6) which partially or completely covers the external surface of the further layer (3).

15. The layer structure (1) according to claim 14, wherein the colour layer (6) comprises at least one pigment or at least one colouring agent or both.

16. A process for preparing a biodegradable layer structure (1) according to any of claims 1 to 15, comprising at least the process steps

(A) providing a biodegradable substrate layer (2);
(B) applying a further layer (3) comprising a plurality of silicon oxide particles (4) to the biodegradable substrate layer (2).

17. The process according to claim 16, wherein the further layer is applied in step (B) from a dispersion comprising the silicon oxide particles (4) and a liquid.

18. The process according to any one of claims 16 or 17, wherein the liquid is selected from the group consisting of water, alcohols, and mixtures thereof.

19. The process according to any one of claims 16 to 18, wherein the further layer (3) is applied in process step (B) by extrusion coating, air knife coating, doctor blade coating, cascade coating or curtain coating.

20. The process according to any one of claims 16 to 19, further comprising a process step (C) of applying a pigment or an organic colouring agent or both to the further layer (3) obtained in process step (B) to obtain a further colour layer (3).

21. The process according to claim 20, wherein the process step (C) is carried out by means of ink-jet printing.

**22.** A layer structure (1) obtainable by a process according to any one of claims 16 to 21.

**23.** A layer structure (1) according to any one of claims 1 to 16 and 22, wherein the layer structure (1) shows at least the following:

i) a biodegradability determined according to ASTM 5511 of at least 1% in 45 days; and
ii) a colour density determined according to ISO 5-3 and ISO 5-4 in the range of from 0.01 to 3.5.

**24.** A Sheet, a film, a packaging material, a display material, or an inkjet recording material comprising a layer structure (1) according to any one of claims 1 to 16, 22 or 23.

**25.** Use of a silicon dioxide layer for smoothing the surface of a layer comprising at least one biodegradable polymer.

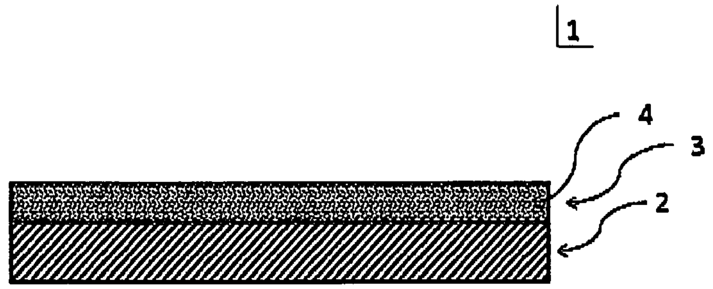


*Figure 1*

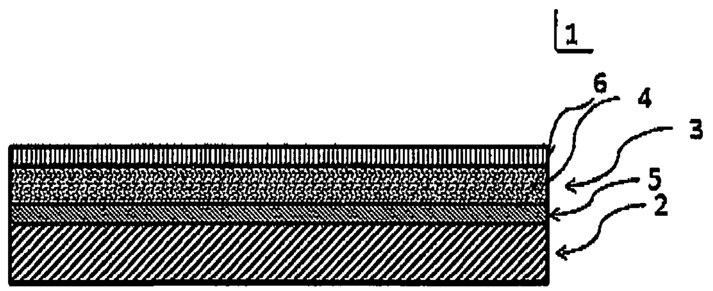


*Figure 2*

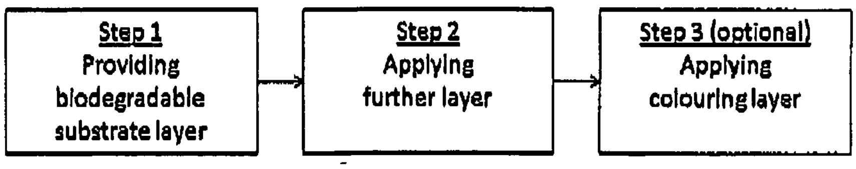


*Figure 3*

Europäisches Patentamt
European Patent Office
Office européen des brevets

# EUROPEAN SEARCH REPORT

Application Number
EP 11 00 8361

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/061122 A1 (BEER ROBERT [CH] ET AL) 5 March 2009 (2009-03-05)<br>* paragraphs [0001] - [0150]; claims 1-19 * | 1-11, 13-25 | INV.<br>B32B7/00<br>B41M5/00<br>C09C1/30<br>C09D7/12 |
| X | EP 1 826 019 A1 (ILFORD IMAGING CH GMBH [CH]) 29 August 2007 (2007-08-29)<br>* paragraphs [0001] - [0075]; claims 1-6 * | 1-11, 13-25 | |
| X | EP 1 693 222 A1 (NISSHIN SPINNING [JP]) 23 August 2006 (2006-08-23)<br>* paragraphs [0001] - [0055]; claims 1-5 * | 1-11, 13-25 | |
| X | EP 1 637 336 A2 (NISSHIN SPINNING [JP]) 22 March 2006 (2006-03-22)<br>* paragraphs [0001] - [0062]; claims 1-3 * | 1-11, 13-25 | |
| X | EP 1 197 345 A1 (ILFORD IMAGING CH GMBH [CH]) 17 April 2002 (2002-04-17)<br>* paragraphs [0001] - [0102]; claims 1-10 * | 1-11, 13-25 | TECHNICAL FIELDS SEARCHED (IPC) |
| X | WO 00/20221 A1 (CABOT CORP [US]) 13 April 2000 (2000-04-13)<br>* page 1, line 1 - page 40, last line; claims 1-36 * | 1-11, 13-25 | B32B<br>B41M<br>C09C<br>C09D |
| X | EP 1 162 076 A1 (ILFORD IMAGING CH GMBH [CH]) 12 December 2001 (2001-12-12)<br>* paragraphs [0001] - [0197]; claims 1-17 * | 1-11, 13-25 | |
| X | EP 1 655 348 A1 (ILFORD IMAGING CH GMBH [CH]) 10 May 2006 (2006-05-10)<br>* paragraphs [0001] - [0086]; claims 1-23 * | 1-11, 13-25 | |

-/--

The present search report has been drawn up for all claims

1

| Place of search | Date of completion of the search | Examiner |
|---|---|---|
| Munich | 2 March 2012 | Ansorge, Markus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 11 00 8361

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 512 544 A1 (ILFORD IMAGING CH GMBH [CH]) 9 March 2005 (2005-03-09) * paragraphs [0001] - [0052]; claims 1-10 * | 1-11, 13-25 | |
| X | EP 1 726 448 A1 (ILFORD IMAGING CH GMBH [CH]) 29 November 2006 (2006-11-29) * paragraphs [0001] - [0038]; claims 1-10 * | 1-11, 13-25 | |
| X | EP 0 705 172 B1 (ILFORD AG [CH]) 23 December 1998 (1998-12-23) * page 1, line 1 - page 15, line 29; claims 1-32 * | 1-11, 13-25 | |
| X | JP 2006 263961 A (UNITIKA LTD) 5 October 2006 (2006-10-05) * abstract * | 1-11, 13-25 | |
| X | JP 2011 062927 A (FUJIFILM CORP) 31 March 2011 (2011-03-31) * abstract * | 1-11, 13-25 | TECHNICAL FIELDS SEARCHED (IPC) |

The present search report has been drawn up for all claims

1

| Place of search | Date of completion of the search | Examiner |
|---|---|---|
| Munich | 2 March 2012 | Ansorge, Markus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 11 00 8361

This annex lists the patent family members relating to the patent documents cited in the above-mentioned European search report.
The members are as contained in the European Patent Office EDP file on
The European Patent Office is in no way liable for these particulars which are merely given for the purpose of information.

02-03-2012

| Patent document cited in search report | Publication date | Patent family member(s) | Publication date |
|---|---|---|---|
| US 2009061122 A1 | 05-03-2009 | NONE | |
| EP 1826019 A1 | 29-08-2007 | AT 451246 T | 15-12-2009 |
| | | AU 2007200670 A1 | 06-09-2007 |
| | | CN 101024355 A | 29-08-2007 |
| | | EP 1826019 A1 | 29-08-2007 |
| | | JP 2007223316 A | 06-09-2007 |
| | | KR 20070083432 A | 24-08-2007 |
| | | US 2007196596 A1 | 23-08-2007 |
| EP 1693222 A1 | 23-08-2006 | EP 1693222 A1 | 23-08-2006 |
| | | JP 2006224457 A | 31-08-2006 |
| | | US 2006182905 A1 | 17-08-2006 |
| EP 1637336 A2 | 22-03-2006 | CN 1749326 A | 22-03-2006 |
| | | EP 1637336 A2 | 22-03-2006 |
| | | JP 2006082494 A | 30-03-2006 |
| | | US 2006062989 A1 | 23-03-2006 |
| EP 1197345 A1 | 17-04-2002 | AT 277774 T | 15-10-2004 |
| | | DE 50008017 D1 | 04-11-2004 |
| | | EP 1197345 A1 | 17-04-2002 |
| | | JP 2002178632 A | 26-06-2002 |
| | | US 2002064634 A1 | 30-05-2002 |
| WO 0020221 A1 | 13-04-2000 | AU 6281399 A | 26-04-2000 |
| | | DE 69922532 D1 | 13-01-2005 |
| | | DE 69922532 T2 | 03-11-2005 |
| | | EP 1124693 A1 | 22-08-2001 |
| | | JP 4704564 B2 | 15-06-2011 |
| | | JP 2002526564 A | 20-08-2002 |
| | | WO 0020221 A1 | 13-04-2000 |
| EP 1162076 A1 | 12-12-2001 | AT 224304 T | 15-10-2002 |
| | | DE 50000533 D1 | 24-10-2002 |
| | | EP 1162076 A1 | 12-12-2001 |
| | | JP 4502546 B2 | 14-07-2010 |
| | | JP 2002036719 A | 06-02-2002 |
| | | US 2002012775 A1 | 31-01-2002 |
| EP 1655348 A1 | 10-05-2006 | AU 2005293632 A1 | 20-04-2006 |
| | | CN 101035868 A | 12-09-2007 |
| | | EP 1655348 A1 | 10-05-2006 |
| | | JP 4481232 B2 | 16-06-2010 |
| | | JP 2006111527 A | 27-04-2006 |
| | | KR 20070058691 A | 08-06-2007 |

EPO FORM P0459

For more details about this annex : see Official Journal of the European Patent Office, No. 12/82

## ANNEX TO THE EUROPEAN SEARCH REPORT ON EUROPEAN PATENT APPLICATION NO. EP 11 00 8361

This annex lists the patent family members relating to the patent documents cited in the above-mentioned European search report.
The members are as contained in the European Patent Office EDP file on
The European Patent Office is in no way liable for these particulars which are merely given for the purpose of information.

02-03-2012

| Patent document cited in search report | Publication date | Patent family member(s) | Publication date |
|---|---|---|---|
| | | US 2006078696 A1 | 13-04-2006 |
| | | WO 2006040304 A1 | 20-04-2006 |
| EP 1512544 A1 | 09-03-2005 | AT 309916 T | 15-12-2005 |
| | | DE 50301695 D1 | 22-12-2005 |
| | | EP 1512544 A1 | 09-03-2005 |
| | | JP 4347772 B2 | 21-10-2009 |
| | | JP 2005104138 A | 21-04-2005 |
| | | US 2005053735 A1 | 10-03-2005 |
| EP 1726448 A1 | 29-11-2006 | AT 419126 T | 15-01-2009 |
| | | AU 2006201996 A1 | 14-12-2006 |
| | | CN 1868758 A | 29-11-2006 |
| | | EP 1726448 A1 | 29-11-2006 |
| | | JP 2006327194 A | 07-12-2006 |
| | | KR 20060121765 A | 29-11-2006 |
| | | US 2006268088 A1 | 30-11-2006 |
| EP 0705172 B1 | 23-12-1998 | AU 2143795 A | 10-11-1995 |
| | | DE 69506822 D1 | 04-02-1999 |
| | | DE 69506822 T2 | 12-08-1999 |
| | | EP 0705172 A1 | 10-04-1996 |
| | | JP 3654901 B2 | 02-06-2005 |
| | | JP H08512258 A | 24-12-1996 |
| | | US 5916673 A | 29-06-1999 |
| | | WO 9528285 A1 | 26-10-1995 |
| JP 2006263961 A | 05-10-2006 | JP 4384075 B2 | 16-12-2009 |
| | | JP 2006263961 A | 05-10-2006 |
| JP 2011062927 A | 31-03-2011 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **S. BRUNAUER ; P.H. EMMET ; J. TELLER.** Adsorption of Gases in Multimolecular Layers. *Journal of the American Chemical Society,* 1938, vol. 60, 309-319
- *NIP22 Final Program and Proceedings,* 2006, 448
- **G. WYS-ZECKI ; W. STILES.** Color Science Concepts and Methods, Quantitative Data and Formulae. John Wiley & Sons, 1982, 164-169829